# EUROPÄISCHE PATENTSCHRIFT

(11) **EP 1 192 225 B1**
(45) Veröffentlichungstag und Bekanntmachung des Hinweises auf die Patenterteilung: **23.04.2003**
(21) Anmeldenummer: 00931283.6
(22) Anmeldetag: 05.06.2000
(51) Int. Cl.: C09D 5/00, C09D 183/04, C08K 5/5419, C08J 7/04

(54) **VERWENDUNG STICKSTOFFFREIER VERBINDUNGEN ALS HAFTVERMITTLER FÜR SILICIUMBASIERTE KRATZFESTBESCHICHTUNGEN AUF POLYCARBONAT**
USE OF NITROGEN-FREE COMPOUNDS AS ADHESION PROMOTERS FOR SILICON-BASED SCRATCH-RESISTANT COATINGS ON POLYCARBONATE
UTILISATION DE COMPOSES EXEMPTS D'AZOTE COMME AGENTS ADHESIFS POUR DES REVETEMENTS RESISTANT A L'ABRASION A BASE DE SILICIUM APPLIQUES SUR DU POLYCARBONATE

(30) Priorität: 16.06.1999 DE 19927409
(43) Veröffentlichungstag der Anmeldung: 03.04.2002
(73) Patentinhaber: Bayer Aktiengesellschaft, 51368 Leverkusen (DE)
(72) Erfinder: MAGER, Michael, D-51375 Leverkusen (DE); KIRSCH, Jürgen, D-51375 Leverkusen (DE); HOFACKER, Steffen, D-35510 Butzbach (DE)
(86) Internationale Anmeldenummer: EP0005118
(87) Internationale Veröffentlichungsnummer: WO00077100

(56) Entgegenhaltungen:
- EP-A- 0 263 428
- DE-A- 19 724 396
- GB-A- 2 113 698
- US-A- 4 299 886
- US-A- 5 371 262

## Beschreibung

Die Erfindung betrifft die Verwendung stickstofffreier Verbindungen als Haftvermittler für siliciumbasierte Kratzfestbeschichtungen auf Kunststoffen.

Kunststoffe sind äußerst vielseitige Werkstoffe mit einer Reihe von wünschenswerten Eigenschaften. Ein Nachteil dieser Werkstoffe ist jedoch z.B. ihre Empfindlichkeit gegenüber mechanischer Beschädigung an der Oberfläche. Auch diverse Chemikalien, wie z.B. viele Lösemittel, können Kunststoffe oberflächlich stark beschädigen.

Eine Methode, die Oberfläche von Kunststoffen vor solcherlei Beschädigungen zu schützen, ist der Auftrag einer geeigneten Beschichtung. Diese kann wiederum, wie der Kunststoff selbst, aus den verschiedensten Materialien bestehen. Dies ist in erster Linie davon abhängig, ob die Oberfläche eher vor mechanischer Beschädigung oder der Einwirkung von Chemikalien geschützt werden soll. Bei transparenten Kunststoffen, wie z.B. Polycarbonaten, ist eine oberflächliche mechanische Beschädigung naturgemäß besonders nachteilig. Zahlreiche Beschichtungsmaterialien sind bekannt, die insbesondere Polycarbonate effektiv vor mechanischer Beschädigung schützen. Dies sind im wesentlichen siliciumbasierte Kratzfestbeschichtungen, die meist kondensations- oder UV-härtend sind. Beispiele finden sich in J. Sol-Gel Sci. Techn. 1998, 11, 153-159, Abstr. 23^{rd} Annual Conference in Organic Coatings, 1997, 271-279, EP-A 02 63 428, DE-A 29 14 427 und DE-A 43 38 361.

Der Auftrag von siliciumbasierten Kratzfestbeschichtungen ist jedoch oft mit dem Problem verbunden, dass die Haftung zwischen Kunststoff und Beschichtung unzureichend ist. Eine Reihe von Methoden, um dennoch eine ausreichende Haftung zu erhalten, sind bereits bekannt. Dazu zählen physikalische Methoden, wie z.B. die Plasma- oder Coronabehandlung, oder die Verwendung eines Haftvermittlers.

Viele Haftvermittler reagieren sowohl mit der Kunststoffoberfläche als auch mit der Kratzfestbeschichtung. Dabei können (kovalente) chemische Bindungen gebildet werden. Im Falle der Beschichtung von Polycarbonaten sind u.a. Aminosilane, wie Aminopropyltrialkoxysilane, gebräuchlich; die Aminogruppe reagiert mit der Polycarbonatoberfläche, die Alkoxysilylreste mit der siliciumbasierten Kratzfestbeschichtung. Stickstoffhaltige Haftvermittler haben jedoch den Nachteil, dass das Polycarbonat durch die basische Stickstoffunktion (z.B. ein primäres Amin) erheblich geschädigt wird, was sich u.a. optisch durch eine erhebliche Gelbfärbung bemerkbar macht. Ein weiterer schwerwiegender Nachteil ist, dass sich die Haftung der siliciumbasierten Kratzfestbeschichtungen bei Auslagerung in Wasser, insbesondere warmem Wasser, rasch vermindert und sich der Film letztendlich vollständig ablöst. Daneben treten oft Blasenbildung und Trübungen auf.

Aufgabe der vorliegenden Erfindung war daher die Bereitstellung von Haftvermittlem, die zu einer guten Haftung siliciumbasierter Kratzfestbeschichtungen auf Polycarbonat führen, ohne die genannten Nachteile, wie optische Beeinträchtigung (Gelbfärbung) und Labilität gegenüber Wasser, aufzuweisen.

Gegenstand der vorliegenden Erfindung ist daher die Verwendung stickstofffreier Verbindungen der Formel (I) und/oder deren Hydrolyse- und Kondensationsprodukten

[R¹(R²)ⱼ]ᵢSiR³ₖ(OR⁴)₄₋ₖ₋ᵢ (I),

in welcher
- i: für die Zahl 1, 2 oder 3,
- j: für eine ganze Zahl von 1 bis 10,
- k: für die Zahl 0, 1 oder 2 steht,
- k + i: ≤ 3 gilt, und
- R¹: für OH, OR, SH, SR, OOC-R, mit R gleich C₁-C₁₀-Alkyl oder C₆-C₁₂-Aryl, steht
- R²: ein gegebenenfalls ein- oder zweifach substituierter Methylenrest ist, wobei ein bevorzugter Substituent R¹ ist, und die Methylenreste in der in der Kette gegebenenfalls ein- oder mehrfach durch Heteroatome unterbrochen sein können,
- R³: ein gegebenenfalls substituierter C₁-C₁₀-Alkyl oder C₆-C₁₂-Arylrest ist und
- R⁴: für einen C₁-C₁₀-Alkyl oder C₆-C₁₂-Arylrest, bevorzugt einen C₁-C₄-Arylrest steht,
als Haftvermittler für siliciumbasierte Kratzfestbeschichtungen auf Polycarbonat.

Die erfindungsgemäß verwendeten Haftvermittler zeigen eine sehr gute Haftung der Beschichtung auf dem Kunststoff ohne Beeinträchtigung der optischen Eigenschaften. Insbesondere tritt keine Gelbfärbung auf. Die Beschichtungen lösen sich auch nach Auslagerung in Wasser nicht ab.

Bevorzugt ist die Verwendung stickstofffreier Verbindungen der Formel (II) und/oder deren Hydrolyse- und Kondensationsprodukten

[R¹(R²)ⱼ]ᵢSiR³ₖ(OR⁴)₄₋ₖ₋ᵢ (II),

in welchen
- i: für die Zahl 1,
- j: für eine ganze Zahl von 1 bis 5,
- k: für die Zahl 0 oder 1 steht und
- R¹: für OH, OR, SH, SR, OOC-R, mit R gleich C₁-C₄-Alkyl oder C₆-Aryl,
- R²: für einen gegebenenfalls mit R¹ substituierten Methylenrest,
- R³: für einens C₁-C₄-Alkyl- oder C₆-Arylrest und
- R⁴: für einen C₁-C₄-Alkylrest stehen.

Besonders bevorzugt ist die Verwendung stickstofffreier Verbindungen der Formel (III) und/oder deren Hydrolyse- und Kondensationsprodukten

[R¹(R²)ⱼ]ᵢSiR³ₖ(OR⁴)₄₋ₖ₋ᵢ (III),

in welchen
- i: für die Zahl 1,
- j: für die Zahl 1, 2 oder 3,
- k: für die Zahl 0 oder 1 steht und
- R¹: für OH, OR, SH, SR, OOC-R, mit R gleich C₁-C₄-Alkyl oder C₆-Aryl,
- R²: für einen gegebenenfalls mit R¹ substituierten Methylenrest und
- R³, R⁴: unabhängig voneinander für einen Methyl- oder Ethylrest stehen.

Ganz besonders bevorzugt ist die Verwendung stickstofffreier Verbindungen der Formel (IV) und/oder deren Hydrolyse- und Kondensationsprodukten

[R¹(R²)ⱼ]ᵢSiR³ₖ(OR⁴)₄ₖ₋ᵢ (IV),

in welchen
- i: für die Zahl 1,
- j: für die Zahl 1,
- k: für die Zahl 0 oder 1 steht und
- R¹: für OH,
- R²: für einen Methylenrest und
- R³, R⁴: unabhängig voneinander für einen Methyl- oder Ethylrest stehen.

Beispielhaft für die erfindungsgemäße Verwendung sind stickstofffreie Haftvermittler der Formeln (Va) bis (V1) genannt:

(Va) HO-CH₂-Si(OCH₃)₃,

(Vb) HO-CH₂-Si(OCH₂CH₃)₃,

(Vc) HO-CH₂-Si(CH₃)(OCH₃)₂,

(Vd) HO-CH₂-Si(CH₃)(OCH₂CH₃)₂,

(Ve) HO-CH₂-Si(CH₃)₂(OCH₃),

(Vf) HO-CH₂-Si(CH₃)₂(OCH₂CH₃),

(Vg) HO-(CH₂)₂-Si(OCH₃)_{3,}

(Vh) HO-(CH₂)₂-Si(OCH₂CH₃)_{3,}

(Vi) HO-(CH₂)₃Si(OCH₃)_{3,}

(Vj) HO-(CH₂)₃Si(OCH₂CH₃)_{3,}

(Vk) HS-(CH₂)₃-Si(OCH₂CH₃)_{3,}

(VI) HS-CH₂-Si(CH₃)(OCH₂CH₃)_{2.}

Die Hydrolyse- und Kondensationsprodukte der Verbindungen der Formel (I) sind durch die Umsetzung mit Wasser, üblicherweise in einem geeigneten Lösemittel und in Gegenwart eines Katalysators, auf einfache Weise zugänglich. Die Durchführung dieser Sol-Gel-Reaktion, d.h. die Hydrolyse der Organyloxysilane der Formel (I) mit Wasser und die Kondensation der Reaktionsprodukte zu höhermolekularen Verbindungen ist dem Fachmann grundsätzlich bekannt.

Die Herstellung der Silylmethanole (Va) und (Vb) ist in US 5 371 262 ausführlich beschrieben; die methylsubstituierten Verbindungen (Vc) bis (Vf) sind in analoger Weise zugänglich.

Polycarbonate im Sinne der Erfindung sind handelsübliche Polycarbonate, z.B. Makrolon®-Typen. Die Haftvermittler sind ebenso gut zur Verwendung auf Polycarbonat-Blends geeignet wie z.B. Bayblend®-Typen.

Siliciumbasierte Beschichtungen im Sinne der Erfindung sind alle mindestens ein Strukturelement Si(O)_{4/2}, R-Si(O)_{3/2}, (R)₂Si(O)_{2/2} oder (R)₃Si(O)_{1/2} aufweisende, durch strahlen- oder thermische Härtung gewonnene, transparente Materialien, die, auf Kunststoffe appliziert, eine Verbesserung der Kratzfestigkeit gegenüber dem unbeschichteten Kunststoff gewährleisten. Die Überprüfung der Kratzfestigkeit kann z.B. mittels Taber-Abraser-Test (ISO 3537, DIN 52 347) erfolgen.

Als Beispiele für siliciumbasierte Beschichtungen seien solche auf Basis polyfunktioneller Organosil(ox)ane genannt, welche Polycarbonat mechanisch und chemisch gut schützen.

Solche polyfunktionellen Organosilane, sowie die Herstellung von Beschichtungen daraus, sind z.B. in DE-A 1 96 03 241, DE-A 1 96 03 242, WO 98/52992 und WO 98/38251 beschrieben.

Weitere Beispiele siliciumbasierter Beschichtungen sind kommerzielle Kratzfestbeschichtungen auf Basis von methyltrialkoxysilangebundenem Kieselsol (z.B. AS 4000, General Electric). Diese sind z.B. in Abstr. 23^{rd} Annual Conference in Organic Coatings, 1997, 271-279, beschrieben.

Die Haftvermittler können rein oder mit einem Lösemittel verdünnt eingesetzt werden. Geeignete Lösemittel sind in der Regel Alkohole, wie Methanol, Ethanol, 1-Propanol, 2-Propanol, 1-Butanol, 2-Butanol, Amylalkohole, 1-Methoxy-2-propanol, sowie Mischungen aus den genannten. Auch andere Lösemittel können verwendet werden, im wesentlichen jedoch mit der Maßgabe, dass das Polycarbonat nicht zu stark angelöst wird.

Die Haftvermittler können mit allen bekannten Techniken, wie z.B. Sprühen, Tauchen, Schleudern, Rakeln, Fluten oder Gießen, auf den Kunststoff aufgebracht werden. Gegebenenfalls vorhandene Lösemittel werden danach bei Temperaturen von 15°C bis kurz oberhalb des Erweichungspunktes des verwendeten Polycarbonates entfernt. Die thermische Behandlung kann zur Verbesserung der Haftvermittlung auch ohne die Anwesenheit leichtflüchtiger Bestandteile sinnvoll sein. Auf Makrolon® wird der Haftvermittler beispielsweise bei 80°C bis 130°C für 30 bis 60 Minuten thermisch behandelt. Die siliciumbasierte Kratzfestbeschichtung kann dann unmittelbar oder nach Lagerung des wie beschrieben vorbehandelten Polycarbonats aufgebracht und ausgehärtet werden.

Neben oder zusätzlich zur thermischen Behandlung kann die Haftvermittlung auch durch Zusatz geeigneter Katalysatoren beschleunigt werden. Als Beispiele seien metallorganische Verbindungen wie Dibutylzinndiluat genannt.

Weiterhin kann der Haftvermittler mi UV-Schutzmitteln, wie Tinuvin®, versehen werden.

Das unter der erfindungsgemäßen Verwendung stickstofffreier Haftvermittler erhaltene, kratzfest beschichtete Polycarbonat kann in Form von Folien und Formteilen in den verschiedensten Anwendungsbereichen eingesetzt werden. Als Beispiel sei der Ersatz von (Flach-)Glas im Gebäude- und Automobilbereich zu nennen.

### Beispiele

### Vorbemerkung

Käufliche Edukte der Firma Aldrich, wie Tetraethylorthosilikat (TEOS), Aminopropyltrimethoxysilan (AMMO), Aluminiumtri-sec.-butylat (ASB) und 1-Methoxy-2-propanol, wurden ohne weitere Reinigung eingesetzt. Die Konzentration der verwendeten wässrigen p-Toluolsulfonsäure war 0,1 mol/l. Die Herstellung des polyfunktionellen Organosiloxans {OSi(CH₃)[(CH₂)₂Si(OH)(CH₃)₂]}₄ (D4-Silanol) erfolgte wie in DE 1 97 11 650 beschrieben. Die verwendeten Polycarbonatplatten (10 x 10 cm) waren handelsübliches Makrolon®, Typ 3103, der Fa. Bayer AG, Leverkusen.

Die Applikation der Haftvermittler und der Kratzfestbeschichtungen erfolgte mittels Schleudern; angegeben ist die maximale Umdrehungszahl in U/min und die Haltezeit bei maximaler Umdrehungszahl in sec.

Der Gitterschnittest wurde in Anlehnung an ISO 2409 mit einem Gitterschnittgerät der Fa. Erichsen (Gitterabstand: 1 mm) durchgeführt. Angegeben ist der Zustand der Beschichtung vor und nach dem Abziehen des Klebestreifens (vor/nach). Die Bestimmung der Kratzfestigkeit erfolgte nach ASTM D 1044, die Messung der Trübung gemäß ASTM D 1003. Angegeben ist die Streulichtzunahme ("delta Haze") nach der Verkratzung.

### Beispiel 1: Vergleich der Haftfestigkeit

a) Herstellung der Beschichtungslösung:
   5,0 g D4-Silanol, 10,6 g 1-Methoxy-2-propanol, 6,4 g TEOS und 1,1 g wässrige p-Toluolsulfonsäure wurden in dieser Reihenfolge unter Rühren vermischt. Nach 60 Minuten Rühren wurde mit 2,6 g 1-Methoxy-2-propanol verdünnt und die Lösung wie unten beschrieben appliziert.
b) Beschichtung mit Haftvermittler und Kratzfestlack aus a):
   Je eine Makrolon®-Platte wurde zunächtst mit einem Rakel (Spalthöhe 30 µm) mit AMMO bzw. Hydroxymethyltriethoxysilan (50 Gew.-% in Ethanol) beschichtet und danach eine Stunde bei 80°C thermisch behandelt. Danach wurde ebenfalls mittels Rakeln (Spalthöhe 60 µm) die Beschichtungslösung aus a) appliziert. Nach 10 Minuten Ablüften bei Raumtemperatur wurde der Schichtaufbau noch eine Stunde bei 130°C ausgehärtet.

Mittels Gittersschnittest wurde bei beiden Proben eine sehr gute Haftung gefunden (0/0).

### Beispiel 2: Vergleich der Wasserbeständigkeit

Herstellung einer Beschichtungslösung auf Basis D4-Silanol
a) TEOS-Vorhydrolysat: zu einer Mischung aus 80 g TEOS und 44 g 1-Methoxy-2-propanol wurden unter Rühren 7,8 g wässrige p-Toluolsulfonsäure gegeben; nach 30 Minuten Rühren wurden nochmals 7,8 g wässrige p-Toluolsulfonsäure zugegeben und die Mischung danach eine Stunde gerührt.
b) Komplexiertes ASB: bei 0°C wurden zu 24 g ASB in 7,8 1-Methoxy-2-propanol 12,6 g Acetessigester gegeben; danach wurde die Eiskühlung entfernt und die Reaktionsmischung noch 50 Minuten gerührt.
   (Die Herstellung der Lösungen a) und b) erfolgte nahezu gleichzeitig).
c) Beschichtungslösung: bei 0°C wurde das komplexierte ASB aus b) zum TEOS-Vorhydrolysat aus a) gegeben; nach 5 Minuten Rühren wurden 15,6 g wässrige p-Toluolsulfonsäure zugegeben, die Eiskühlung nach der Zugabe entfernt und die Reaktionsmischung eine weitere Stunde gerührt. Schließlich wurde noch eine Lösung von 21,2 g D4-Silanol in 39,1 g 1-Methoxy-2-propanol zugegeben und nochmals eine Stunde bei Raumtemperatur gerührt. Die erhaltene Beschichtungslösung war farblos und klar.

### Kratzfestbeschichtung von Makrolon® mit der Beschichtungslösung aus Beispiel 1

Je eine Makrolon®-Platte wurde zwecks Haftvermittlung zunächst mit AMMO bzw. Hydroxymethyltriethoxysilan (50 Gew.-% in Ethanol) beschichtet (2000 U/min, 20 sec) und danach 30 Minuten bei 130°C thermisch behandelt. Dann wurde die Beschichtungslösung aus Beispiel 1 aufgetragen (500 U/min, 20 sec); nach 60 h bei Raumtemperatur und einer Stunde bei 130°C wurden die wiederum auf Raumtemperatur abgekühlten, kratzfestbeschichteten Makrolon®-Platten bei 65°C in dest. Wasser gelagert. Wie in Tabelle 1 gezeigt, ist nur der erfindungsgemäße Haftvermittler wasserlagerungsbeständig.

**Tabelle 1:**

| Haftvermittler | Optischer Eindruck / Gitterschnittest | | | | |
|---|---|---|---|---|---|
| | 1 Tag | 2 Tage | 3 Tage | 4 Tage | 8 Tage |
| AMMO | >40% der Fläche zeigt weiße Trübung / erhebliche Ablösungen 1/4 | Test abgebrochen, keine verwertbaren Resultate zu erzielen | | | |
| Hydroxymethyltriethoxysilan (erfindungsgemäß) | optisch unverändert / keine Ablösung 0/0 | optisch unverändert / keine Ablösung 0/0 | optisch unverändert / keine Ablösung 0/0 | optisch unverändert / keine Ablösung 0/0 | optisch unverändert / keine Ablösung 0/0 |

### Beispiel 3: Vergleich der Thermovergilbung (Gelbzunahme)

Je 7 Makrolon®-Platten wurden zunächst mittels Schleudern (2000 U/min, 20 sec) mit AMMO bzw. Hydroxymethyltriethoxysilan (50 Gew.-% in Ethanol) beschichtet und danach eine Stunde bei 80°C thermisch behandelt. Danach wurde ebenfalls mittels Schleudern (750 U/min, 20 sec) die Beschichtungslösung aus Beispiel 2) appliziert. Danach wurden die Proben gemäß den in Tabelle 2 angegebenen Bedingungen thermisch behandelt.

**Tabelle 2:**

| Proben-Nr. | Haftvermittler*) | Lagerung beim Raumtemperatur [h] | Härtung bei 130°C [h] | Gelbwert b* |
|---|---|---|---|---|
| 1 | AMMO | 24 | 0 | 0,5 |
| 2 | AMMO | 24 | 1 | 0,7 |
| 3 | AMMO | 24 | 2 | 0,8 |
| 4 | AMMO | 24 | 4 | 1,0 |
| 5 | AMMO | 24 | 6 | 1,1 |
| 6 | AMMO | 24 | 15 | 1,8 |
| 7 | AMMO | 24 | 20 | 2,1 |
| 8 | HMTS | 24 | 0 | 0,3 |
| 9 | HMTS | 24 | 1 | 0,5 |
| 10 | HMTS | 24 | 2 | 0,6 |
| 11 | HMTS | 24 | 4 | 0,6 |
| 12 | HMTS | 24 | 6 | 0,7 |
| 13 | HMTS | 24 | 15 | 0,8 |
| 14 | HMTS | 24 | 20 | 0,6 |

| | | | | |
|---|---|---|---|---|
| *) AMMO = 3-Aminopropyltrimethoxysilan; HMTS = Hydroxymethyltriethoxysilan | | | | |

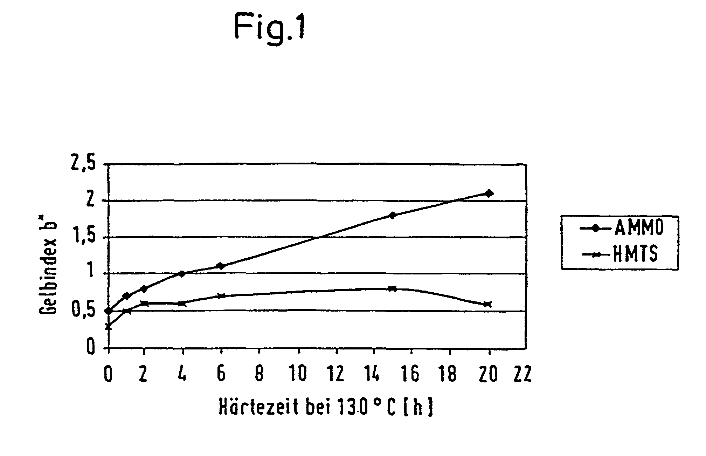

Aus den in der Tabelle 2 aufgeführten Gelbwerten (b*) geht eindeutig hervor, dass der stickstoffhaltige Haftvermittler zu einer drastischen Thermovergilbung führt. Bei Verwendung des erfindungsgemäßen Haftvermittlers wird hingegen keine stetige Zunahme des Gelbwertes bei thermischer Belastung beobachtet. Dieser Zusammenhang ist in Abbildung 1 graphisch verdeutlicht.

## Patentansprüche

1. Verwendung stickstofffreier Verbindungen der Formel (I) und/oder deren Hydrolyse- und Kondensationsprodukten
[R¹(R²)ⱼ]ᵢSiR³ₖ(OR⁴)₄₋ₖ₋ᵢ (I),
in welcher
i für die Zahl 1, 2 oder 3,
j für eine ganze Zahl von 1 bis 10,
k für die Zahl 0, 1 oder 2 steht,
k + i ≤ 3 gilt, und
R¹ für OH, OR, SH, SR, OOC-R, mit R gleich C₁-C₁₀-Alkyl oder C₆-C₁₂-Aryl, steht
R² ein gegebenenfalls ein- oder zweifach substituierter Methylenrest ist, wobei ein bevorzugter Substituent R¹ ist, und die Methylenreste in der in der Kette gegebenenfalls ein- oder mehrfach durch Heteroatome unterbrochen sein können,
R³ ein gegebenenfalls substituierter C₁-C₁₀-Alkyl oder C₆-C₁₂-Arylrest ist und
R⁴ für einen C₁-C₁₀-Alkyl oder C₆-C₁₂-Arylrest, bevorzugt einen C₁-C₄-Arylrest steht,
als Haftvermittler für siliciumbasierte Kratzfestbeschichtungen auf Polycarbonat.

2. Verwendung gemäß Anspruch 1, **dadurch gekennzeichnet, dass** als stickstofffreier Haftvermittler der Formeln (Va) bis (Vf) oder deren Hydrolyse- und Kondensationsprodukten eine oder mehrere Verbindungen, ausgewählt aus der Gruppe
(Va) HO-CH₂-Si(OCH₃)₃,
(Vb) HO-CH₂-Si(OCH₂CH₃)₃,
(Vc) HO-CH₂-Si(CH₃)(OCH₃)₂,
(Vd) HO-CH₂-Si(CH₃)(OCH₂CH₃)₂,
(Ve) HO-CH₂-Si(CH₃)₂(OCH₃),
(Vf) HO-CH₂-Si(CH₃)₂(OCH₂CH₃),
(Vg) HO-(CH₂)₂-Si(OCH₃)₃,
(Vh) HO-(CH₂)₂-Si(OCH₂CH₃)_{3,}
(Vi) HO-(CH₂)₃Si(OCH₃)_{3,}
(Vj) HO-(CH₂)₃Si(OCH₂CH₃)_{3,}
(Vk) HS-(CH₂)₃-Si(OCH₂CH₃)_{3,}
(Vl) HS-CH₂-Si(CH₃)(OCH₂CH₃)_{2,}
eingesetzt werden.

## Claims

1. Use of nitrogen-free compounds corresponding to formula (I) and/or their hydrolysis products and condensation products
[R¹(R²)ⱼ]ᵢSiR³ₖ(OR⁴)₄₋ₖ₋ᵢ (I),
wherein
i denotes the number 1, 2 or 3,
j denotes an integer from 1 to 10,
k denotes the number 0, 1 or 2,
k + i is<3, and
R¹ denotes OH, OR, SH, SR, OOC-R, with R being C₁-C₁₀-alkyl or C₆-C₁₂-aryl,
R² is an optionally singly or doubly substituted methylene group, wherein R¹ is a preferred substituent, and the methylene groups in the chain may optionally be interrupted once or several times by hetero atoms,
R³ is an optionally substituted C₁-C₁₀-alkyl or C₆-C₁₂-aryl group and
R⁴ denotes a C₁-C₁₀-alkyl or C₆-C₁₂-aryl group, preferably a C₁-C₄-aryl group,
as adhesion promoters for silicon-based scratch-resistant coatings on polycarbonate.

2. Use according to claim 1, **characterised in that** one or more compounds, selected from among
(Va) HO-CH₂-Si(OCH₃)₃,
(Vb) HO-CH₂-Si(OCH₂CH₃)₃,
(Vc) HO-CH₂-Si(CH₃)(OCH₃)₂,
(Vd) HO-CH₂-Si(CH₃)(OCH₂CH₃)₂,
(Ve) HO-CH₂-Si(CH₃)₂(OCH₃),
(Vf) HO-CH₂-Si(CH₃)₂(OCH₂CH₃),
(Vg) HO-(CH₂)₂-Si(OCH₃)₃,
(Vh) HO-(CH₂)₂-Si(OCH₂CH₃)₃,
(Vi) HO-(CH₂)₃Si(OCH₃)₃,
(Vj) HO-(CH₂)₃Si(OCH₂CH₃)₃,
(Vk) HS-(CH₂)₃-Si(OCH₂CH₃)₃,
(Vl) HS-CH₂-Si(CH₃)(OCH₂CH₃)₂
are used as nitrogen-free adhesion promoters corresponding to formulae (Va) to (Vf) or their hydrolysis products and condensation products.

## Revendications

1. Utilisation de composés exempts d'azote répondant à la formule (I) et/ou de leurs produits d'hydrolyse et de condensation
[R¹(R²)ⱼ]ᵢSiR³ₖ(OR⁴)₄₋ₖ₋ᵢ (I),
dans laquelle
i est égal à 1, 2 ou 3,
j est un nombre entier allant de 1 à 10,
k est égal à 0, 1 ou 2,
k + i ≤ 3 et,
R¹ représente un groupe OH, OR, SH, SR, OOC-R, R représentant un groupe alkyle en C₁-C₁₀ ou aryle en C₆-C₁₂,
R² représente un groupe méthylène portant éventuellement un ou deux substituants, l'un des substituants les plus appréciés étant R¹, et les groupes méthylène de la chaîne pouvant être interrompus le cas échéant dans celle-ci une ou plusieurs fois par des hétéroatomes,
R³ représente un groupe alkyle en C₁-C₁₀ ou aryle en C₆-C₁₂ éventuellement substitué, et
R⁴ représente un groupe alkyle en C₁-C₁₀ ou aryle en C₆-C₁₂, de préférence un groupe aryle en C₁-C₄,
en tant qu'agents d'adhérence pour des revêtements à base de silicium résistants à l'éraflage sur polycarbonate.

2. Utilisation selon la revendication 1, **caractérisée en ce que** l'on utilise en tant qu'agents d'adhérence exempts d'azote de formules (Va) à (Vf) ou leurs produits d'hydrolyse et de condensation un ou plusieurs composés choisis dans le groupe suivant
(Va) HO-CH₂-Si(OCH₃)₃,
(Vb) HO-CH₂-Si(OCH₂CH₃)₃,
(Vc) HO-CH₂-Si(CH₃)(OCH₃)₂,
(Vd) HO-CH₂-Si(CH₃)(OCH₂CH₃)₂,
(Ve) HO-CH₂-Si(CH₃)₂(OCH₃),
(Vf) HO-CH₂-Si(CH₃)₂(OCH₂CH₃),
(Vg) HO-(CH₂)₂-Si(OCH₃)₃,
(Vh) HO-(CH₂)₂-Si(OCH₂CH₃)₃,
(Vi) HO-(CH₂)₃Si(OCH₃)₃,
(Vj) HO-(CH₂)₃Si(OCH₂CH₃)₃,
(Vk) HS-(CH₂)₃-Si(OCH₂CH₃)₃,
(Vl) HS-CH₂-Si(CH₃)(OCH₂CH₃)₂.
